**Europäisches Patentamt**

**European Patent Office**

**Office européen des brevets**

(19)

(11) Veröffentlichungsnummer : **0 112 978**
**B1**

(12) **EUROPÄISCHE PATENTSCHRIFT**

(45) Veröffentlichungstag der Patentschrift :
07.05.86

(21) Anmeldenummer : 83109828.0

(22) Anmeldetag : 01.10.83

(51) Int. Cl.⁴ : **B 01 D 3/16**, B 01 D 53/18,
F 28 F 23/02

(54) Flüssigkeitsverteiler für eine Stoff- und Wärmeaustauschkolonne.

(30) Priorität : 04.01.83 CH 24/83

(43) Veröffentlichungstag der Anmeldung :
11.07.84 Patentblatt 84/28

(45) Bekanntmachung des Hinweises auf die Patenterteilung : 07.05.86 Patentblatt 86/19

(84) Benannte Vertragsstaaten :
BE DE FR GB IT NL SE

(56) Entgegenhaltungen :
DE-A- 1 442 929
FR-A- 703 029
GB-A- 193 116
GB-A- 487 946
GB-A- 675 874
GB-A- 1 160 260
US-A- 4 264 538

(73) Patentinhaber : GEBRÜDER SULZER AKTIENGE-
SELLSCHAFT
Zürcherstrasse 9
CH-8401 Winterthur (CH)

(72) Erfinder : Hofstetter, Josef
Schulstrasse 42
CH-8542 Wiesendangen (CH)

(74) Vertreter : Dipl.-Ing. H. Marsch Dipl.-Ing. K. Sparing
Dipl.-Phys.Dr. W.H. Röhl Patentanwälte
Rethelstrasse 123
D-4000 Düsseldorf (DE)

**Beschreibung**

Die Erfindung betrifft einen Flüssigkeitsverteiler für eine Stoff- und Wärmeaustauschkolonne gemäss Oberbegriff von Anspruch 1.

Flüssigkeitsverteiler bezwecken eine gleichmässige Verteilung der Flüssigkeit über den Querschnitt derartiger Kolonnen.

Gebräuchliche Typen solcher Kolonnen, auf welche die Erfindung vorteilhaft Anwendung finden kann, sind insbesondere Kolonnen, bei denen die Austauschabschnitte aus geordneten Packungen, z. B. aus geriffelten, lammellenartigen Elementen, bestehen. Jedoch kann die Erfindung auch bei solchen Kolonnen verwendet werden, in denen die Austauschabschnitte aus regellosen Schüttungen von Füllkörpern, beispielsweise Raschigringen oder aus jeweils einem Bündel von vertikalen, parallel angeordneten Kanälen bestehen, wobei entweder bei grösserem Durchmesser der einzelnen Kanäle diese mit Füllkörpern ausgefüllt sind oder bei kleinem Durchmesser der Kanäle die Kolonne als eine sogenannte Filmkolonne ausgebildet ist.

In derartigen Kolonnen kann z. B. eine Destillation, Rektifikation, Extraktion, Absorption, auch eine Abtrennung isotoper Elemente aus einem Stoff aufgrund einer chemischen Austauschreaktion wie auch ein Wärmeaustausch zwischen einer Flüssigkeit und einem dampf- bzw. gasförmigen Medium durchgeführt werden.

Bekanntlich hängt die Wirkung, in den erstgenannten Fällen die Trennwirkung und im letztgenannten Fall die Wärmeübertragung wesentlich von einer gleichmässigen und feinen Verteilung der Flüssigkeit auf die Oberfläche eines Austauschabschnittes ab.

Von der grossen Anzahl von Flüssigkeitsverteilern werden nachstehend einige bekannte und häufig angewendete Typen erwähnt.

So besteht beispielsweise eine bekannte Ausführungsform darin, Flüssigkeitsverteiler als Loch- oder Siebböden mit einer grossen Anzahl von gleichmässig angeordneten Lochungen oder Lochtüllen mit Ueberlaufsystemen auszubilden.

Diese Ausführungsform hat den Nachteil einer grossen Abdeckung des Kolonnenquerschnittes, um eine einigermassen gleichmässige Flüssigkeitsverteilung über den gesamten Kolonnenquerschnitt zu erreichen. Trotz den Dampfkaminen und dem möglichen Spalt zwischen Verteiler und Kolonnenwand ist der freie Querschnitt für den Dampfdurchtritt sehr eingeengt, was zu einem hohen Druckabfall führt. Es ist auch schon vorgeschlagen worden, seitliche Röhrchen anzubringen. Diese Massnahme erhöht zwar die Gleichmässigkeit der Flüssigkeitsverteilung, vermag jedoch den gasseitig grossen Druckabfall nur geringfügig zu verringern.

Eine weitere gebräuchliche Ausführungsform besteht darin, Flüssigkeitsverteiler als Rinnenoder Kastenverteiler auszubilden, die Schlitze oder V-förmige Einschnitte in den Seitenwänden für den Flüssigkeitsüberlauf bzw. Kapillarsysteme aufweisen.

Derartige Flüssigkeitsverteiler weisen zwar einen geringeren Druckabfall des Dampfes auf. Jedoch haben sie den wesentlichen Nachteil, dass der Verteiler exakt horizontal eingebaut werden muss. Geringste Abweichungen von der Horizontalen, Wellenbewegungen oder Gradienten in der Strömungsrichtung der Flüssigkeit bewirken eine ungleichmässige Verteilung der Flüssigkeit und damit eine Verminderung der Trennleistung bzw. der Wärmeübertragung. Die Wellenbewegungen bzw. Gradienten sind die Folge relativ grosser Flüssigkeitsmengen in den Kanälen, und diese können deshalb nicht beliebig eng gewählt werden.

Eine weitere bekannte Ausführungsform besteht darin, Flüssigkeitsverteiler als sogenannte Kasten- oder Rohrverteiler mit Lochungen an der Unterseite für den Flüssigkeitsablauf auszubilden.

Diese Verteilungssysteme weisen jedoch den wesentlichen Nachteil auf, dass die Flüssigkeit nur unterhalb der Kästen bzw. der Rohre abströmen kann. Dieses hat zur Folge, dass eine grosse Anzahl von Kästen bzw. Rohren für eine feine Verteilung der Flüssigkeit erforderlich ist, was einerseits einen hohen gasseitigen Druckabfall bewirkt und andererseits konstruktiv aufwendig ist.

Schliesslich ist aus der DE-OS-29 45 103 ein Flüssigkeitsverteiler für eine Gegenstromkolonne bekannt, der als Rinnen- oder Kastenverteiler mit Durchtrittsöffnungen für die Flüssigkeit in den Seitenwänden versehen ist, wobei die Flüssigkeit durch als Zungen oder schnabelähnlich (vergl. FR-PS-703 029) ausgebildete Leitelemente nach unten geführt werden soll.

Abgesehen davon, dass die bekannte Ausführungsform konstruktiv äusserst aufwendig ist, weist sie in funktioneller Hinsicht die nachstehenden Nachteile auf. So kann abwärts strömende Flüssigkeit von den Kanten der Zungen von aufwärts strömendem Gas bzw. Dampf abgerissen und vom Gas- bzw. Dampfstrom nach oben mitgerissen werden. Ausserdem läuft die Flüssigkeit nicht als Strahl von den Zungen ab, sondern im wesentlichen als Tropfen, so dass bei grossen Gasbelastungen die Tropfen ebenfalls vom Gas mitgerissen werden. Schliesslich besteht noch die Gafahr, dass die äusseren Zungen mindestens bei hohen Gasbelastungen im Gasstrom vibrieren können, was zur Zerstörung der Zungen führen kann.

Gegenüber den bekannten Vorrichtungen hat sich die Erfindung die Ausbildung eines Flüssigkeitsverteilers zum Ziel gesetzt, welcher ausser einer preisgünstigen Herstellungsweise, eine exakte gleichmässige Flüssigkeitsverteilung über den Kolonnenquerschnitt unabhängig von der Gas- bzw. Dampfbelastbarkeit ermöglicht.

Diese Aufgabe wird erfindungsgemäss durch die im Kennzeichen des Anspruchs 1 angegebenen Merkmale gelöst.

Erfindungsgemäss ausgebildete Flüssigkeitsverteiler sind baulich einfach und tragen zu einer hohen Trennleistung bzw. optimalen Wärmeübertragung in Kolonnen wesentlich bei.

Die Erfindung wird im folgenden anhand von in der Zeichnung dargestellten Ausführungsbeispielen erläutert.

Figur 1 zeigt in schematischer Darstellungsweise einen Ausschnitt einer Kolonne mit einer erfindungsgemässen Ausführungsform eines Flüssigkeitsverteilers im Längsschnitt und

Figur 2 eine Draufsicht auf den Flüssigkeitsverteiler, während in den

Figur 3-7 Ausschnitte von verschiedenen Ausführungsformen in perspektivischer Darstellungsweise dargestellt sind.

Figur 8 zeigt in einem Schnitt ein Detail einer weiteren Ausführungsform.

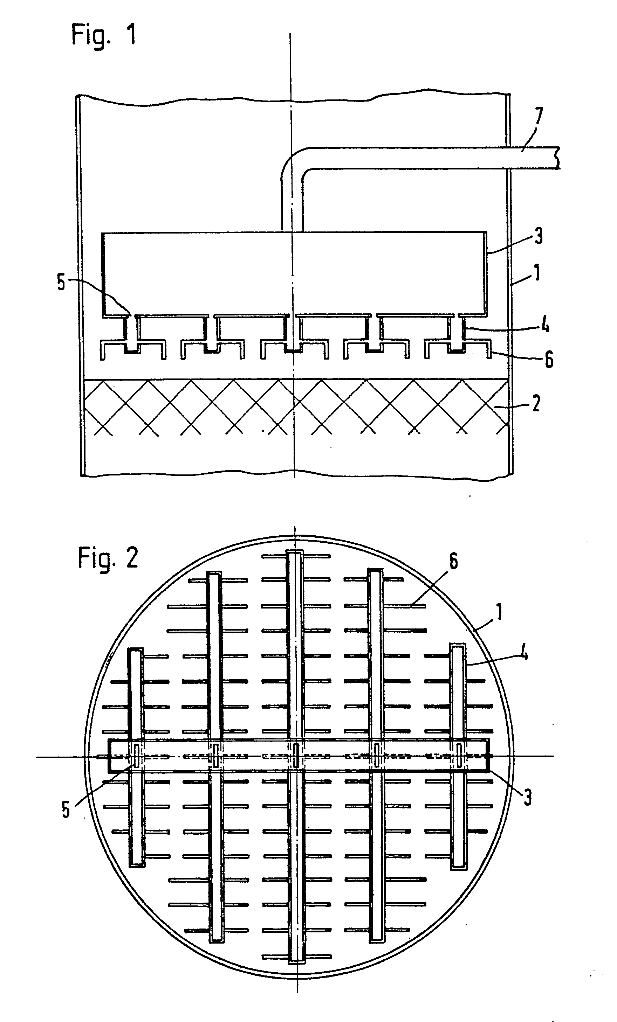

Fig. 1 zeigt einen Ausschnitt einer Stoffaustauschkolonne 1 und zwar den obersten Stoffaustauschabschnitt 2, der beispielsweise aus einem Packungskörper mit geordneter Struktur besteht. Oberhalb dieses Austauschabschnittes ist ein Flüssigkeitsverteiler angeordnet, der in nicht dargestellter Weise beispielsweise auf einem Rost abgestützt ist. Im Ausführungsbeispiel besteht der Flüssigkeitsverteiler aus einem als länglicher Trog 3 ausgebildeten Hauptkanal, an dessen Unterseite Nebenkanäle 4 angeordnet sind, die ein U-Profil aufweisen und mit dem Hauptkanal durch Durchtrittsöffnungen 5 für die Flüssigkeit in Verbindung stehen.

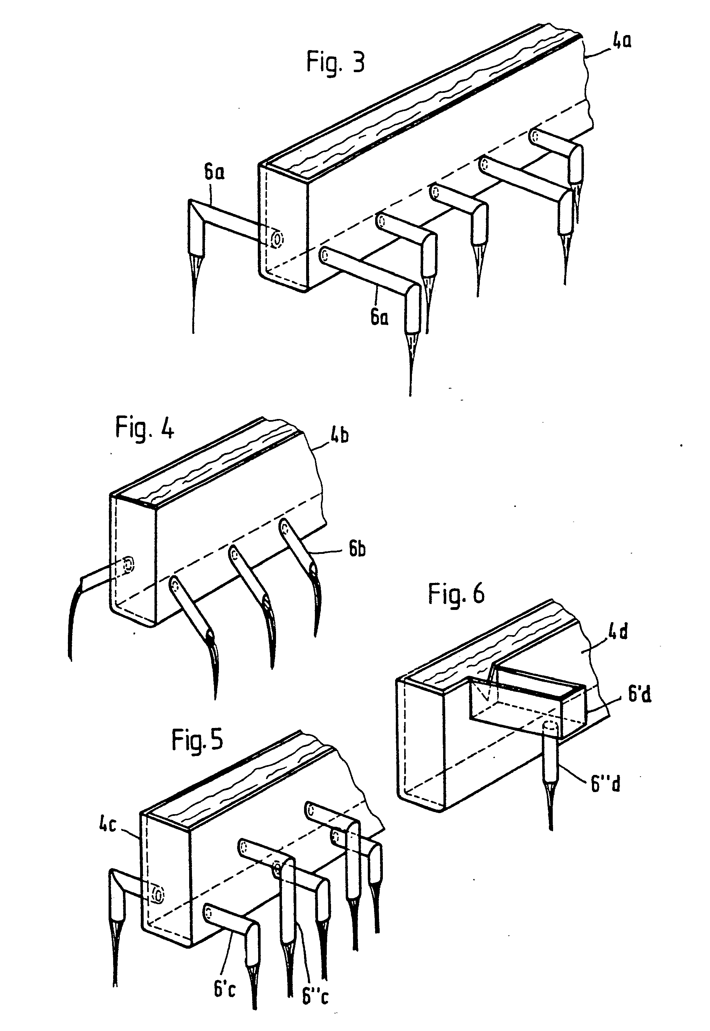

Wie aus Fig. 2 ersichtlich ist, sind die Nebenkanäle 4 in Abständen voneinander angeordnet und erstrecken sich über einen Grossteil des Kolonnenquerschnitts.

In erfindungsgemässer Weise sind auf beiden Längsseiten der Nebenkanäle 4 Strömungskanäle 6 angeordnet, die im Ausführungsbeispiel unterschiedliche Längen aufweisen und die, wie Fig. 1 zeigt, als nach unten abgebogene Röhrchen ausgebildet sind.

Im Betrieb wird durch ein Rohr 7 Flüssigkeit in den Trog 3 eingeleitet, von wo aus sie in die Nebenkanäle 4 strömt und durch die Röhrchen 6 seitlich weggeführt und gleichmässig über den gesamten Querschnitt des Stoffaustauschteiles 2 in Form von Flüssigkeitsstrahlen verteilt wird.

Aufgrund der erfindungsgemässen Massnahme kann die Anzahl der Nebenkanäle 4 gegenüber bekannten Ausführungsformen wesentlich verringert werden, was einen geringen Druckabfall des aufwärtsströmenden Dampfes zur Folge hat bzw. höhere Dampfströme zulässt. Ausserdem wird die Herstellung des Flüssigkeitsverteilers billiger.

Da üblicherweise Austauschkolonnen mehrere, durch Zwischenräume getrennte Stoffaustauschabschnitte aufweisen, werden in den Zwischenräumen unterhalb der Austauschabschnitte Sammler bekannter Ausführungsformen angeordnet, von welchen die Flüssigkeit in einem unterhalb eines jeden Sammlers angeordneten Flüssigkeitsverteiler eingeleitet wird.

Fig. 3 zeigt einen Ausschnitt eines Nebenkanals 4a, bei dem die Strömungskanäle 6a als nach unten abgewinkelte Röhrchen ausgebildet sind, wobei die horizontalen Teile der Röhrchen unterschiedliche Längen aufweisen. Diese Ausführung hat den Vorteil, dass die Flüssigkeit an jeden beliebigen Punkt des Kolonnenquerschnittes geführt werden kann, und somit eine exakt gleichmässige Flüssigkeitsverteilung erreicht wird.

In Fig. 4 ist eine Ausführungsform eines Nebenkanals 4b dargestellt, welcher an seinen beiden Seiten mit schräg nach unten gerichteten, rohrförmigen Strömungskanälen 6b verbunden ist. Auch bei dieser Ausführungsform können die Röhrchen verschiedene Längen haben.

Die in Fig. 5 dargestellte Ausführungsform zeigt einen Nebenkanal 4c, an den seitlich zwei Reihen von Röhrchen 6'c und 6"c übereinander angeschlossen sind.

Dieses Ausführungsbeispiel hat den Vorteil, dass der Flüssigkeitsdurchsatz einen erweiterten Bereich aufweist.

Fig. 6 zeigt eine Ausführungsform, bei der an einen Nebenkanal 4d horizontale Strömungskanäle 6'd angeschlossen sind, die trogartig ausgebildet sind und mit dem Nebenkanal 4d durch V-förmige Durchtrittsöffnungen verbunden sind. Anstelle einer V-förmigen Ausführung der Durchtrittsöffnungen können diese beispielsweise auch schlitzförmig ausgebildet sein. Im Endbereich der Strömungskanäle 6'd sind an deren Unterseite vertikale Röhrchen 6"d angebracht.

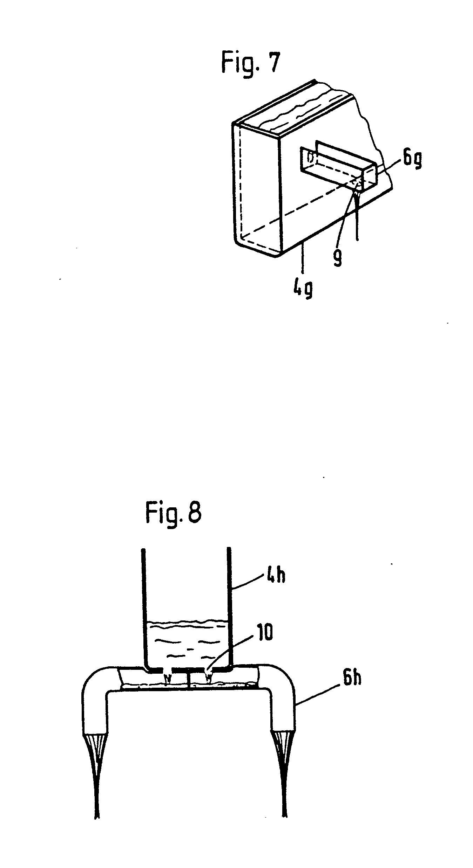

Die Fig. 7 zeigt eine Ausführungsform eines Strömungskanals 6g, der an einen Nebenkanal 4g angeschlossen ist, welcher ähnlich wie Fig. 6 aus einem trogartigen Teil 6g besteht, an dessen Unterseite jedoch eine Oeffnung 9 angebracht ist.

Fig. 8 zeigt einen Schnitt quer zu einem Nebenkanal 4h, der an seiner Unterseite Durchtrittsöffnungen 10 aufweist, die die Verbindung mit abgewinkelten Strömungskanälen 6h herstellen. Die Strömungskanäle 6h können an dem Nebenkanal 4h geschweisst oder nur gesteckt sein.

Es sei darauf hingewiesen, dass bei allen dargestellten Ausführungsformen die Nebenkanäle zusätzlich zu den Strömungskanälen durch die eine seitliche Flüssigkeitsverteilung bewirkt wird, an ihrer Unterseite mit abstandsweise angeordneten Lochungen versehen sein können, durch die Flüssigkeit direkt oder über Röhrchen nach unten abströmt.

**Patentansprüche**

1. Flüssigkeitsverteiler für eine Stoff- und Wärmeaustauschkolonne mit einer Anzahl in Abständen über den Kolonnenquerschnitt verteilten Nebenkanälen, welche mit der zu verteilenden Flüssigkeit aus einem Hauptkanal beschickbar sind, und die Oeffnungen für den Flüssigkeitsaustritt aufweisen, dadurch gekennzeichnet, dass mit den Nebenkanälen eine Anzahl von Strömungskanälen verbunden sind, durch welche die Flüssigkeit seitlich weggeführt und gleichmässig über den Kolonnenquerschnitt in Form von Flüssigkeitsstrahlen verteilt wird.

2. Flüssigkeitsverteiler nach Anspruch 1, dadurch gekennzeichnet, dass die Strömungskanäle als Röhrchen ausgebildet sind.

3. Flüssigkeitsverteiler nach Anspruch 1, dadurch gekennzeichnet, dass die Strömungskanäle als Rinnen oder als Tröge ausgebildet sind.

4. Flüssigkeitsverteiler nach Anspruch 2 oder 3, dadurch gekennzeichnet, dass die Strömungskanäle nach unten abgewinkelt bzw. abgebogen sind.

5. Flüssigkeitsverteiler nach Anspruch 1, dadurch gekennzeichnet, dass die Strömungskanäle in mindestens zwei Reihen übereinander angeordnet sind.

6. Flüssigkeitsverteiler nach Anspruch 1, dadurch gekennzeichnet, dass die Strömungskanäle unterschiedliche Längen aufweisen.

7. Flüssigkeitsverteiler nach Anspruch 1, dadurch gekennzeichnet, dass die Nebenkanäle zusätzliche Oeffnungen an ihrer Unterseite aufweisen, durch welche ein Teil der Flüssigkeit direkt abströmt.

## Claims

1. A liquid distributor for a mass transfer and heat exchange column, comprising a number of auxiliary ducts distributed at intervals over the column cross-section and adapted to be fed from a main duct supplying the liquid for distribution, the said auxiliary ducts having apertures for the liquid delivery, characterised in that a number of flow ducts by means of which the liquid is laterally conveyed and distributed uniformly over the column cross-section in the form of liquid jets are connected to the auxiliary ducts.

2. A liquid distributor according to claim 1, characterised in that the flow ducts are in the form of small tubes.

3. A liquid distributor according to claim 1, characterised in that the flow ducts are in the form of channels or troughs.

4. A liquid distributor according to claim 2 or 3, characterised in that the flow ducts are angled or bent downwards.

5. A liquid distributor according to claim 1, characterised in that the flow ducts are disposed one above the other in at least two rows.

6. A liquid distributor according to claim 1, characterised in that the flow ducts have different lengths.

7. A liquid distributor according to claim 1, characterised in that the auxiliary ducts have additional apertures at the bottom, through which some of the liquid flows off directly.

## Revendications

1. Répartiteur de liquide pour colonne d'échange de matières et d'échange thermique, comportant un certain nombre de canaux auxiliaires qui sont répartis à intervalles sur la section de la colonne, peuvent être alimentés à partir d'un canal principal par le liquide devant être réparti, et présentent des orifices assurant la sortie du liquide, caractérisé par le fait qu'un certain nombre de canaux d'écoulement, reliés aux canaux auxiliaires, provoquent la déviation latérale du liquide et la répartition uniforme de ce liquide, sur la section de la colonne, sous la forme de jets de liquide.

2. Répartiteur de liquide selon la revendication 1, caractérisé par le fait que les canaux d'écoulement sont réalisés en tant que petits tubes.

3. Répartiteur de liquide selon la revendication 1, caractérisé par le fait que les canaux d'écoulement sont réalisés en tant que rigoles ou en tant qu'auges.

4. Répartiteur de liquide selon la revendication 2 ou 3, caractérisé par le fait que les canaux d'écoulement sont respectivement coudés ou cintrés vers le bas.

5. Répartiteur de liquide selon la revendication 1, caractérisé par le fait que les canaux d'écoulement sont agencés en au moins deux rangées superposées.

6. Répartiteur de liquide selon la revendication 1, caractérisé par le fait que les canaux d'écoulement présentent des longueurs différentes.

7. Répartiteur de liquide selon la revendication 1, caractérisé par le fait que les canaux auxiliaires comportent, à leur face inférieure, des orifices supplémentaires par l'intermédiaire desquels une partie du liquide s'écoule directement.

Fig. 1

Fig. 2

Fig. 3

6a

6a

4a

Fig. 4

4b

6b

Fig. 6

4d

6'd

6''d

Fig. 5

4c

6'c

6''c

Fig. 7

6g

9

4g

Fig. 8

4h

10

6h